# EUROPEAN PATENT SPECIFICATION

(11) **EP 3 721 704 B1**
(45) Date of publication and mention of the grant of the patent: **20.07.2022**
(21) Application number: 20167789.5
(22) Date of filing: 02.04.2020
(51) Int. Cl.: A01G 13/02, A01G 17/06

(54) **A PROTECTION SYSTEM FOR AGRICULTURAL CROPS**
SCHUTZSYSTEM FÜR LANDWIRTSCHAFTLICHE KULTUREN
SYSTÈME DE PROTECTION POUR CULTURES AGRICOLES

(30) Priority: 09.04.2019 IT 201900005456
(43) Date of publication of application: 14.10.2020
(73) Proprietor: Montanari, Marco, 37038 Soave (Verona) (IT)
(72) Inventor: Montanari, Marco, 37038 Soave (Verona) (IT)
(74) Representative: Braidotti, Andrea

(56) References cited:
- EP-A1- 2 269 442
- WO-A2-2014/174417
- CH-A5- 685 187
- IT-A1- MI20 091 409
- US-A- 4 313 279

## Description

The present invention relates to a protection system for agricultural crops.

In particular, the present invention is advantageously used to protect plant crops, such as vineyards or fruit plants in general.

The description that follows will make explicit reference to known cultivation protection systems, without thereby losing generality, cultivated in rows defined by support head poles able to support a series of steel wires placed under tension to form a support structure for the plants themselves called espalier.

Known protections are generally constituted by simple nets which cover the row in its entirety and which must be laid manually on the row by operators in the sector. Both the laying and lifting activities involve a considerable expenditure of time for the long lengths and extensions of the rows themselves as well as the use of systems to make everything stable in relation to weather conditions.

EP 2269442 relates to a weather protection system for crops, comprising a series of posts forming rows in correspondence with the rows of the corresponding plantation, establishing at the upper part of each post a roll formed by a sheet rolled on a torsional tube (7) with which tensioning cables (5) are integral.

ITM120091409 relates to covering system for orchards, in particular antihail covering for vineyards, intermediate pole and head pole used to realize this system

The main purpose of the present invention is to provide a system that allows to effectively protect plant crops from atmospheric phenomena, in particular from hail or from the wind or equivalent intense phenomena, while allowing the growth of the crops themselves within the system and their optimal containment with reduction of leaf bundling in the wall.

Another object of the present invention is to provide a system that allows to effectively protect crops from possible attacks and damage to fruits by animals, such as birds, ungulates, insects.

A further object of the present invention is to provide a protection system that can be temporarily and easily removed and lifted during the pruning, management of the cluster or fruit harvesting phases, such as during the harvest also through mechanical grape harvesters.

A further object of the present invention is to obtain a long-lasting protection system in relation to external meteorological events, of durable and easily maintainable materials.

These purposes and others that will result from the following description are achieved according to the invention with a protection system for agricultural crops as described in claim 1.

The present invention is further clarified below in a preferred form of practical embodiment with reference to the attached drawings wherein:
Figure 1 schematically shows a preferred embodiment of the system object of the present invention, in a perspective view that represents the operational configuration of use of protection;
Figure 2 shows the system of figure 1, in a front view which represents a second partial operative configuration of opening;
Figure 3 shows an axonometric view of a detail of the system object of the invention in an operative condition of protection;
Figure 4 shows a side view of a detail of the system object of the invention in a condition for collecting the net;
Figure 5 shows a detail of the system object of the invention in an axonometric view;
Figure 6 shows an exploded axonometric view of the detail shown in fig. 4 in the same operating condition;
Figure 7 schematically shows a preferred embodiment of the system object of the present invention, in a perspective view that represents the operational configuration of use of opening.

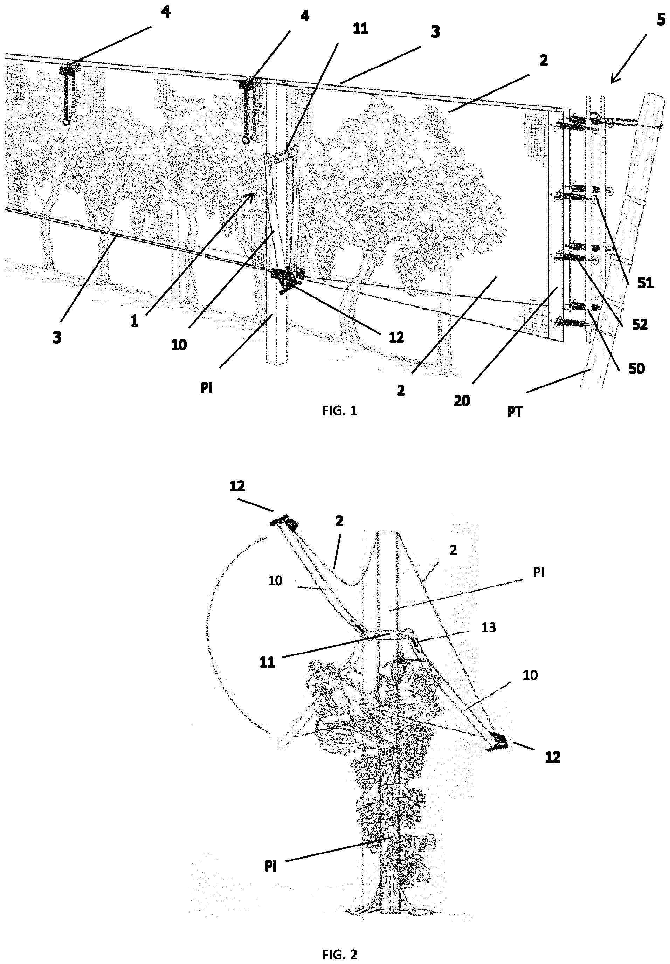

With reference to figure 1, a protection system for agricultural crops, such as vineyards or fruit trees in general, arranged in rows defined by head poles PT, capable of supporting the entire support structure of the cultivation in row also called espalier (one of the two head poles PT is shown in fig. 1).

The system object of the invention includes two protection nets 2 for crops, each defined by two cables 3, generally made of steel, one upper and one lower, which define the extension between the bottom and top.

Laterally each net 2 ends with a terminal portion 20 cooperating with a collection system 5, which will be described later.

Each network 2 is also connected to a handling device 1, which allows it to be lifted for pruning and maintenance of the cultivation and lowering to protect the cultivation from hail, violent meteorological events, animals and insects.

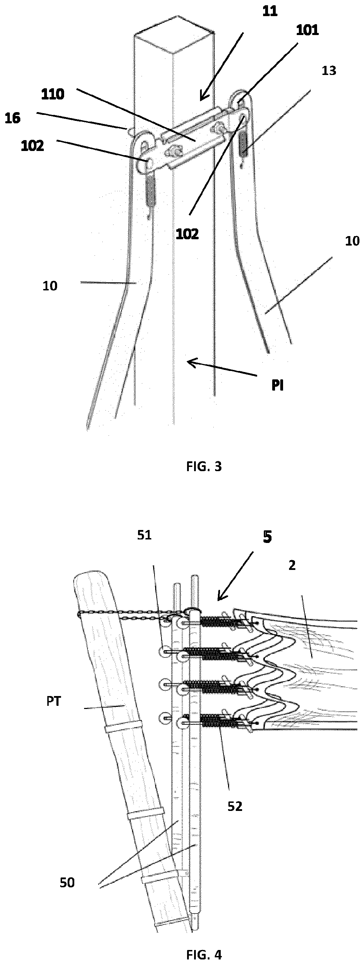

The movement device 1 comprises a pair of levers or arms 10 pivoted to a connection block 11 in turn firmly fixed to an intermediate pole PI of the espalier (Figures 2 and 3).

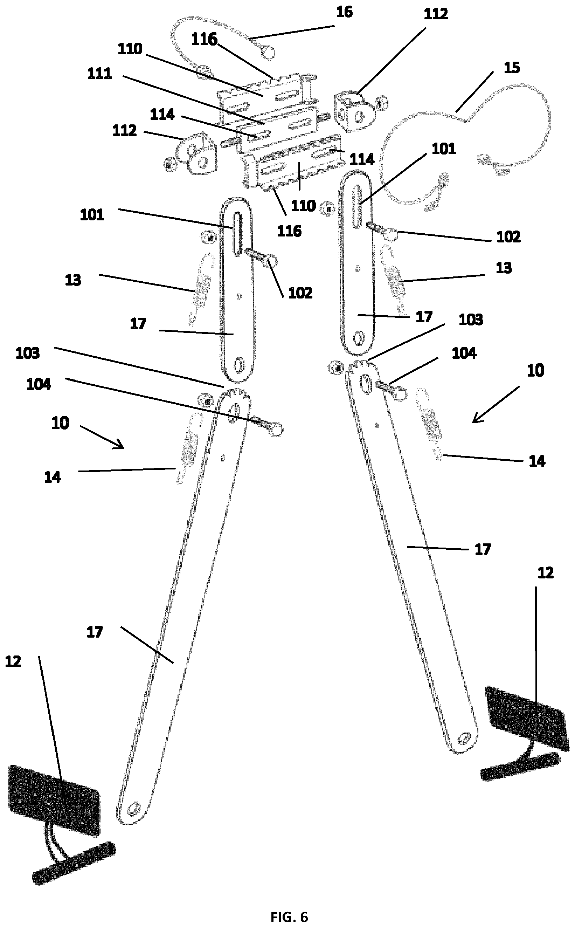

Said connection block 11, for all the embodiments described in the present invention, is in turn composed of a pair of fixing brackets 110 interposed by a joint element 111 capable of engaging a fork 112 at each of its ends (cf. fig. 6).

Inside said fork 112 an end of the arms 10 is pivoted, by means of a corresponding slot 101, so that the arm 10 can be raised and lowered, being able to rotate around its fulcrum represented by a pin 102 a screw or any other pin. As described, this end of the arm 10 is constrained to rotate inside the fork 112 around the pin 102 (fig. 4), but due to the space inside the fork 112, the arm 10 allows, in addition to the rotation, even small swing movements which make it possible to compensate for any play or imbalance due to the installation of the system object of the invention on crops or sloping rows.

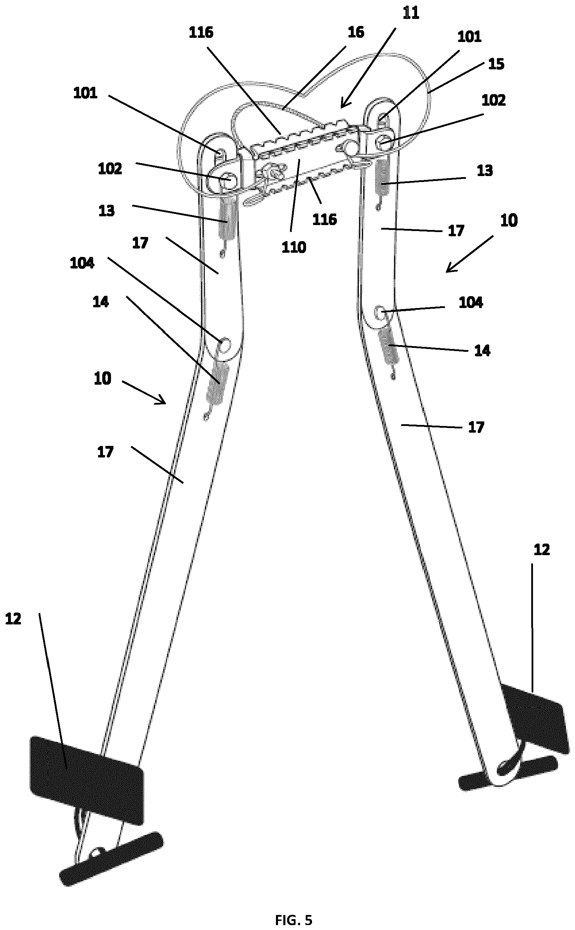

Each fixing bracket 110 also has a "C" shaped end portion 112, the external profile of which is adapted to constrain the arms 10 in the desired operating configuration, keeping them in said position, due to the mutual cooperation of the inserted pin 102 in the slot 101 and a spring 13, or equivalent means, constrained to the pin 102 and to the arm 10 (as illustrated in figs. 3 and 5).

In summary, the device 1 is manually moved by agricultural operators (or on command of computerized means not shown), between a first operative configuration of protection and leaf containment (Figure 1) wherein the arms 10 are lowered on both sides to enclose crops effectively, and a second opening configuration (left portion in Figure 2) with at least one of the two arms 10 raised to allow direct access to the crops themselves.

In order to allow the movement of the arms 10 from the protective configuration, the operator must pull the corresponding arm 10 downwards, this operation being allowed due to the fact that the pin 102 can slide inside the slot 101, thus overcoming the contrasting reaction of the spring 13, to disengage the end of the arm 10 from the lateral constraint imposed by the end portion 112 and therefore being able to freely rotate the arm 10 to the upper rest position, i.e. the opening configuration, wherein the arm 10 is automatically conveyed, due to the biasing action of the spring 13.

Once pruning or maintenance on the crop is finished, from such configuration, the operator, in order to lower the arm 10, must first raise it, overcoming the contrasting action of the spring 13, to disengage the end of the arm 10 from the lateral constraint imposed from the end portion 112 and therefore to be able to freely rotate the arm 10 downwards to the lower rest position, i.e. the protection configuration, wherein the arm 10 is automatically conveyed due to the return action of the spring 13.

Furthermore, the fixing brackets 110 and the articulation element 111 are provided with two possible sets of through slots 114, inside the first series of which a jumper 16 is inserted, making it to pass around the intermediate pole PI of the espalier and inserting the free end in the corresponding second series of slots 114, and fixing it by means of screws or equivalent fixing systems to firmly fix the movement device 1 to the desired intermediate pole PI of the espalier.

The use of the jumper 16 cooperating with the two series of slots 114 allows to adapt the fixing of the movement device 1 to all possible types of intermediate pole PI.

The fixing brackets 110 can also be equipped with toothed profiles 116 to increase the grip of the connection block 11 and therefore of the movement device 1 to the intermediate pole PI.

The connection block 11 can also provide a shaped spring 115 or other equivalent elastic spacer means which protects the net 2 from rubbing the same with the moving mechanical parts of the moving device 1 during its operative implementation.

The arms 10 are applied to the lower cable 3 of the net 2 by means of suitable fixing plates 12 provided with elastic bands passing through corresponding holes in the end parts of the arms 10 or in the elements of arms 17 in the second embodiment which will be illustrated below, and corresponding holes on the net 2 or in any case applied in ways equivalent to the net 2.

In a second embodiment, the arms 10 can be divided into two arm elements 17 (as visible in figs. 5 and 6) pivoted and rotated together by means of a further return spring 14. This embodiment allows partial access to cultivation and is useful if you want targeted protection against birds and animals, being able to further close the two nets 2 in the lower part at the lower cable 3 to prevent entry. of animals and / or insects.

Further with regard to the second embodiment which provides that each arm 10 is constituted by two pivoted and rotatable arm elements 17, the possibility of rotating can also be made adjustable by arranging the end portion of one of the two arm elements 17 of a toothed profile 103, able to engage in the corresponding pin 104 for rotation of the two arm elements 17. In this way said pin 104, to which the spring 14 is also applied and around which the two arm elements 17 rotate reciprocally, thus allows the operator to vary and choose the desired angle formed between the two arm elements 17 (see fig. 6).

The net 2 is equipped with a reinforced and tear-resistant selvedge, specifically designed for the management of the inter-row mechanisms, and is hooked to the aforementioned cables 3, usually made of steel, by means of suitable hook plates 4 (Figures 1, 2, 4 and 5) for hooking and quick release, and designed to allow the net 2 to be collected at rest during the winter or during normal pruning, harvest or equivalent operations.

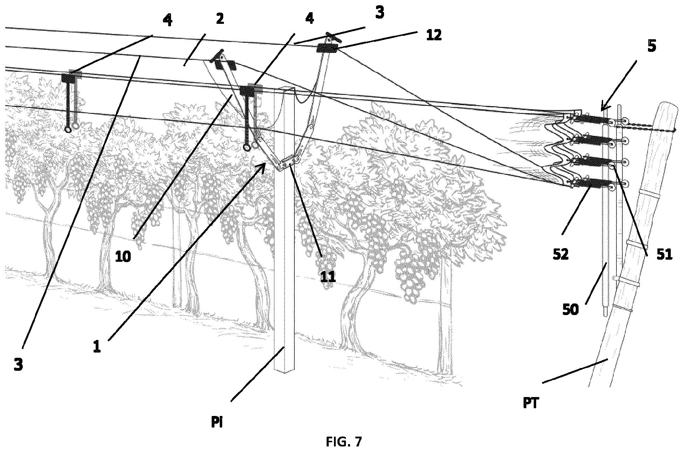

According to what is illustrated in Figures 1, 4 and 7, the system object of the invention is also provided with a collection system 5 comprising tubes 50 or equivalent sliding elements, suitably coupled to the head poles PT of the espalier, keeping them vertical with respect to the ground. On said sliding elements 50 are constrained to slide perpendicularly with respect to the ground, as can be seen in detail in Figure 3, suitable rollers 51 connected to corresponding springs 52, or equivalent elastic means, in turn suitably fixed to the end portion 20 of the net 2. This sliding takes place during the aforementioned collection phases of the network 2 in the winter periods or in any case during the switching from the protection configuration to the opening configuration and vice versa. The springs 52 have the function of facilitating the collection of the mesh 2 during the opening phase of the protection system (see fig. 7) and, at the same time, of maintaining the tensional state of the mesh 2 adequately during all the phases operating of the protection system object of the invention.

## Claims

1. Protection system configured to be installed on espaliers of plant crops arranged in rows, said espaliers comprising head posts and intermediate poles supporting a series of wires to form a support structure for said crops, said protection comprising two protection nets (2) adapted to be arranged one on each side of the row to be protected and a movement device (1) which can be firmly fixed to an intermediate pole of the espalier and comprising arms (10) pivoted to said movement device (1), said arms (10) being configured to be moved between a first operating position for protection and leaf containment of said crops, and a second opening position wherein said arms (10) are arranged raised with respect to said crops, **characterized in that** said protection system further comprising two collection systems (5) each applicable to a terminal portion (20) of the net (2) and configured to be applicable to the end pole of the row and to allow easy collection of the corresponding net (2) at the end pole of the row during the operation of the protection system, said arms (10) being pivoted to a connection block (11) which in turn can be securely fixed to one of the intermediate poles of the espalier, said connection block (11) comprising in turn a pair of fixing brackets (110) interposed by a joint element (111) capable of engaging at each of its ends a fork (112) where a corresponding end of the arms (10) is pivoted by means of a corresponding slot (101) by means of a corresponding pin (102) wherein each fixing bracket (110) has a "C" shaped end portion (112) with an external profile, the latter due to the effect of the mutual cooperation of the pin (102) inserted in the slot (101) and of a spring (13) connected to said pin (102) and to the corresponding arm (10), is configured to constrain the arms (10) in the desired operating configuration.

2. System according to claim 1, **characterized in that** the collection system (5) comprises two sliding elements (50) which can be vertically connected, with respect to the ground, to the head pole of the espalier, and equipped with rollers (51) connected to corresponding elastic means (52) in turn connected to each end portion (20) of each net (2), said rollers (51) being constrained to slide on the corresponding sliding element (50) keeping the corresponding net (2) stretched when in use.

3. System according to claim 1, **characterized in that** the fixing brackets (110) and the joint element (111) are equipped with two sets of slots (114), where a jumper (16) can be inserted therein once it has girded the intermediate pole of the espalier during installation, remaining integral with it, thereby firmly fixing the movement device (1) to the designated intermediate pole of the espalier.

4. System according to each of the preceding claims, wherein each arm (10) comprises two arm elements (17) pivoted and rotatable together around a pin (104) and connected to each other by means of a return spring (14).

5. System according to claim 1 **characterized in that** the end portion of one of the two arm elements (17) constituting the arm (10) comprises a toothed profile (103) capable of engaging in the corresponding rotation pin (104) of the two arm elements (17).

6. System according to one or more of the preceding claims, **characterized in that** the fixing brackets (110) are equipped with toothed profiles (116) to increase the grip of the connection block (11) and of the movement device (1) to the intermediate pole designated for installation.

7. System according to one or more of the preceding claims, **characterized in that** it comprises elastic means (15) adapted to depart the movement device (1) from the net (2) to protect the net (2) from rubbing against the moving mechanical parts of the movement device (1) during system operation.

8. System according to one or more of the preceding claims, **characterized in that** it comprises quick-release and quick-coupling plates (4) suitable for allowing the collection fastening of the nets (2).

## Patentansprüche

1. Schutzsystem, das zur Installation auf Spalieren von in Reihen angeordneten Pflanzenkulturen ausgelegt ist, wobei die Spaliere Kopfpfosten und Zwischenstangen umfassen, die eine Reihe von Drähten tragen, um eine Stützstruktur für die Kulturen zu bilden, wobei der Schutz zwei Schutznetze (2), die eingerichtet sind, um jeweils auf einer Seite der zu schützenden Reihe angeordnet zu sein, und eine Bewegungsvorrichtung (1), die fest an einer Zwischenstange des Spaliers befestigt werden kann und Arme (10) umfasst, die an der Bewegungsvorrichtung (1) schwenkbar angelenkt sind, umfasst, wobei die Arme (10) ausgelegt sind, um zwischen einer ersten Betriebsposition zum Schutz und zur Blatteingrenzung der Kulturen und einer zweiten Öffnungsposition, in der die Arme (10) in Bezug auf die Kulturen erhöht angeordnet sind, bewegt zu werden, **dadurch gekennzeichnet, dass** das Schutzsystem ferner zwei Sammelsysteme (5) umfasst, die jeweils auf einem Endabschnitt (20) des Netzes (2) anbringbar sind und ausgelegt sind, um auf der Endstange der Reihe anbringbar zu sein und eine einfache Sammlung des entsprechenden Netzes (2) an der Endstange der Reihe während des Betriebs des Schutzsystems zu ermöglichen, wobei die Arme (10) an einem Verbindungsblock (11) schwenkbar angelenkt sind, der wiederum sicher an einer der Zwischenstangen des Spaliers befestigt sein kann, wobei der Verbindungsblock (11) wiederum ein Paar Befestigungsbügel (110) umfasst, zwischen denen ein Gelenkelement (111) eingefügt ist, das in der Lage ist, an jedem seiner Enden eine Gabel (112) in Eingriff zu nehmen, an der ein entsprechendes Ende der Arme (10) durch einen entsprechenden Schlitz (101) durch einen entsprechenden Stift (102) schwenkbar angelenkt ist, wobei jeder Befestigungsbügel (110) einen "C"-förmigen Endabschnitt (112) mit einem äußeren Profil aufweist, wobei Letzteres aufgrund des Effekts des gegenseitigen Zusammenwirkens des in den Schlitz (101) eingesetzten Stifts (102) und einer mit dem Stift (102) und dem entsprechenden Arm (10) verbundenen Feder (13) ausgelegt ist, um die Arme (10) in der gewünschten Betriebskonfiguration zurückzuhalten.

2. System nach Anspruch 1, **dadurch gekennzeichnet, dass** das Sammelsystem (5) zwei Gleitelemente (50) umfasst, die in Bezug auf den Boden vertikal mit dem Kopfpfosten des Spaliers verbunden und mit Rollen ausgestattet sein können, die mit entsprechenden elastischen Mitteln (52) verbunden sind, die wiederum mit jedem Endabschnitt (20) jedes Netzes (2) verbunden sind, wobei die Rollen (51) zum Gleiten auf dem entsprechenden Gleitelement (50) gezwungen sind, wodurch das entsprechende Netz (2) bei der Verwendung gespannt gehalten wird.

3. System nach Anspruch 1, **dadurch gekennzeichnet, dass** die Befestigungsbügel (110) und das Gelenkelement (111) mit zwei Sätzen von Schlitzen (114) ausgestattet sind, in die eine Brücke (16), sobald sie die Zwischenstange des Spaliers während der Installation umschlossen hat, eingesetzt werden kann und fest mit dieser verbunden bleibt, wodurch die Bewegungsvorrichtung (1) fest an der vorgesehenen Zwischenstange des Spaliers befestigt wird.

4. System nach jedem der vorhergehenden Ansprüche, wobei jeder Arm (10) zwei Armelemente (17) umfasst, die schwenkbar angelenkt und zusammen um einen Stift (104) drehbar sind und durch eine Rückstellfeder (14) miteinander verbunden sind.

5. System nach Anspruch 1, **dadurch gekennzeichnet, dass** der Endabschnitt eines der zwei Armelemente (17), der den Arm (10) bildet, ein gezahntes Profil (103) umfasst, das in der Lage ist, den entsprechenden Drehstift (104) der zwei Armelemente (17) in Eingriff zu nehmen.

6. System nach einem oder mehreren der vorhergehenden Ansprüche, **dadurch gekennzeichnet, dass** die Befestigungsbügel (110) mit gezahnten Profilen (116) ausgestattet sind, um den Halt des Verbindungsblocks (11) und der Bewegungsvorrichtung (1) an der zur Installation vorgesehenen Zwischenstange zu erhöhen.

7. System nach einem oder mehreren der vorhergehenden Ansprüche, **dadurch gekennzeichnet, dass** es elastische Mittel (15) umfasst, die eingerichtet sind, um die Bewegungsvorrichtung (1) von dem Netz (2) zu beabstanden, um das Netz (2) vor einem Reiben gegen die sich bewegenden mechanischen Teile der Bewegungsvorrichtung (1) während des Systembetriebs zu schützen.

8. System nach einem oder mehreren der vorhergehenden Ansprüche, **dadurch gekennzeichnet, dass** es Schnellöffnungs- und Schnellkupplungsplatten (4) umfasst, die geeignet sind, um die Sammlung un die Verschluss der Netze (2) zu ermöglichen.

## Revendications

1. Système de protection configuré pour être installé sur des espaliers de cultures végétales disposés en rangées, lesdits espaliers comprenant des piquets de tête et des poteaux intermédiaires supportant une série de fils pour former une structure de support pour lesdites cultures, ladite protection comprenant deux filets de protection (2) adaptés à être disposés un de chaque côté de la rangée à protéger et un dispositif de déplacement (1) qui peut être fixé solidement à un poteau intermédiaire de l'espalier et comprenant des bras (10) articulés audit dispositif de déplacement (1), lesdits bras (10) étant configuré pour être déplacé entre une première position de fonctionnement pour la protection et le confinement des feuilles desdites récoltes, et une deuxième position d'ouverture dans laquelle lesdits bras (10) sont agencés relevés par rapport auxdites récoltes, **caractérisé en ce que** ledit système de protection comprenant en outre deux des systèmes (5) applicables chacun à une partie terminale (20) du filet (2) et configurés pour être applicables au poteau d'extrémité de la rangée et pour permettre une collecte aisée du filet correspondant (2) au poteau d'extrémité de la rangée lors du fonctionnement du système de protection, lesdits bras (10) étant articulés sur un bloc de liaison (11) qui à son tour peut être solidement fixé à l'un des poteaux intermédiaires de l'espalier, ledit bloc de liaison (11) comprenant à son tour une paire de pattes de fixation (110) interposées par un élément d'articulation (111) apte à engager à chacune de ses extrémités une fourche (112) où une extrémité correspondante des bras (10) est pivotée au moyen d'un fente correspondante (101) au moyen d'une goupille correspondante (102) dans laquelle chaque patte de fixation (110) a une partie d'extrémité en forme de "C" (112) avec un profil extérieur, ce dernier étant dû à l'effet de la coopération mutuelle de la goupille (102) inséré dans la fente (101) et d'un ressort (13) relié audit axe (102) et au bras correspondant (10), est configuré pour contraindre les bras (10) dans la configuration de fonctionnement souhaitée.

2. Système selon la revendication 1, **caractérisé en ce que** le système de ramassage (5) comprend deux éléments coulissants (50) pouvant être reliés verticalement, par rapport au sol, au mât de tête de l'espalier, et équipés de galets (51) reliés à des moyens élastiques correspondants (52) reliés à leur tour à chaque portion d'extrémité (20) de chaque filet (2), lesdits galets (51) étant contraints de coulisser sur l'élément coulissant correspondant (50) maintenant le filet correspondant (2) étiré lors de l'utilisation.

3. Système selon la revendication 1, **caractérisé en ce que** les pattes de fixation (110) et l'élément de jonction (111) sont munis de deux jeux de fentes (114), dans lesquelles un cavalier (16) peut être inséré une fois qu'il a ceint le pôle intermédiaire de l'espalier lors de l'installation, restant solidaire de celuici, fixant ainsi fermement le dispositif de déplacement (1) au pôle intermédiaire désigné de l'espalier.

4. Système selon chacune des revendications précédentes, dans lequel chaque bras (10) comprend deux éléments de bras (17) articulés et rotatifs ensemble autour d'un axe (104) et reliés l'un à l'autre au moyen d'un ressort de rappel (14).

5. Système selon la revendication 1 **caractérisé en ce que** la partie d'extrémité de l'un des deux éléments de bras (17) constituant le bras (10) comporte un profil denté (103) apte à s'engager dans l'axe de rotation correspondant (104) des deux éléments de bras (17).

6. Système selon une ou plusieurs des revendications précédentes, **caractérisé en ce que** les pattes de fixation (110) sont équipées de profils dentés (116) pour augmenter l'adhérence du bloc de connexion (11) et du dispositif de déplacement (1) pour le poteau intermédiaire désigné pour l'installation.

7. Système selon une ou plusieurs des revendications précédentes, **caractérisé en ce qu'**il comprend des moyens élastiques (15) adaptés pour écarter le dispositif de déplacement (1) du filet (2) pour protéger le filet (2) du frottement contre le mouvement parties mécaniques du dispositif de déplacement (1) pendant le fonctionnement du système.

8. Système selon une ou plusieurs des revendications précédentes, **caractérisé en ce qu'**il comprend des plaques à dégagement rapide et à couplage rapide (4) adaptées pour permettre la fixation de collecte des filets (2).
